# EUROPÄISCHE PATENTANMELDUNG

(11) **EP 4 056 391 A1**
(43) Veröffentlichungstag der Anmeldung: **14.09.2022**
(21) Anmeldenummer: 22160805.2
(22) Anmeldetag: 08.03.2022
(51) Int. Cl.: B60F 3/00

(54) **AMPHIBIENFAHRZEUG**

(30) Priorität: 09.03.2021 DE 102021105645
(71) Anmelder: Stallinger, Martin, 94110 Wegscheid (DE)
(72) Erfinder: Stallinger, Martin, 94110 Wegscheid (DE)
(74) Vertreter: advotec.

(57) **Zusammenfassung**

Amphibienfahrzeug (1, 1') mit einem einen Boden (3) sowie eine Bordwand (4) aufweisenden Bootsrumpf (2), an welchem mindestens zwei Räder (8) angeordnet sind, wobei am Bootsrumpf (2) ein einen Wohn- und/oder Nutzraum bildender Aufbau (6) angeordnet ist, wobei die Räder (7) mittels mindestens eines Betätigungselements (11) von einer Fahrstellung, in welcher sich die Räder (8) zumindest teilweise unterhalb des Bodens (3) des Bootsrumpfes (2) befinden, in eine Schwimmstellung, in welcher sich die Räder (8) oberhalb des Bodens (3) des Bootsrumpfes (2) befinden, verschwenkbar sind.

## Beschreibung

Die vorliegende Erfindung betrifft ein Amphibienfahrzeug, welches sowohl als Boot, insbesondere Kajütboot, als auch als Landfahrzeug, insbesondere Wohnanhänger benutzt werden kann.

Aus der DE 2 043 325 ist ein trailerbares Hausboot bekannt, welches aus einem Bootskörper mit als Wohnkörper ausgebautem Aufbau besteht, wobei der Wohnkörper und der Bootskörper als voneinander unabhängige, aufeinander abgestimmte Einheiten ausgebildet sind, die voneinander trennbar sind. Dieses System hat jedoch den Nachteil, dass das Hausboot immer nur an derjenigen Stelle an Land gebracht werden kann, wo das zugehörige Fahrwerk zurückgelassen wurde.

Der vorliegenden Erfindung liegt die Aufgabe zugrunde, ein Amphibienfahrzeug zur Verfügung zu stellen, welches schnell und einfach von einem Wasserfahrzeug in ein Landfahrzeug und umgekehrt überführbar ist.

Diese Aufgabe wird erfindungsgemäß durch ein Amphibienfahrzeug mit einem einen Boden sowie Bordwände aufweisenden Bootsrumpf gelöst, an welchem mindestens zwei Räder angeordnet sind, wobei am Bootsrumpf ein einen Wohn- und/oder Nutzraum bildender Aufbau angeordnet ist, wobei die Räder mittels mindestens eines Betätigungselements von einer Fahrstellung, in welcher sich die Räder zumindest teilweise unterhalb des Bodens des Bootrumpfes befinden, in eine Schwimmstellung, in welcher sich die Räder oberhalb des Bodens des Bootsrumpfes befinden, verschwenkbar sind.

Durch die Verschwenkbarkeit der Räder kann das Amphibienfahrzeug schnell und einfach von einer Fahrstellung, in welcher sich die Räder zumindest teilweise unterhalb des Bodens des Bootsrumpfes befinden, in eine Schwimmstellung überführt werden. Durch die Tatsache, dass die Räder in der Schwimmstellung oberhalb des Bodens des Bootsrumpfes positioniert sind und daher nicht über den Bootsrumpf hinausragen, wird erreicht, dass das Amphibienfahrzeug auch bei sehr niedrigem Wasserstand als Wasserfahrzeug nutzbar ist, da nicht die Gefahr besteht, dass die Räder den Grund eines Gewässers erreichen, bevor der Boden des Bootsrumpfes den Grund kontaktiert. Dadurch ist auch bei sehr niedrigem Wasserstand ein Fahren auf Wasser möglich. Zum Überführen von einer Schwimmstellung in eine Fahrstellung muss die Querachse lediglich entsprechend nach unten in Richtung Erdboden verschwenkt werden.

Vorzugsweise sind die Räder jeweils an einem Haltegestell, insbesondere einer Einzelradschwinge angeordnet, welches vorzugweise um eine quer zur Fahrtrichtung angeordnete Schwenkachse verschwenkbar ist. Dadurch ist ein besonders einfaches Verschwenken der Räder mit einer einfachen Schwenkkonstruktion möglich.

Mit Vorteil greift ein Betätigungselement an einem Haltegestell an und verschwenkt das Haltegestell mit dem daran angeordneten Rad bzw. den daran angeordneten Rädern. Dadurch muss das Betätigungselement nicht direkt an den Rädern angreifen.

Bei dem Betätigungselement kann es sich beispielsweise um einen Hydraulikzylinder handeln. Vorzugsweise handelt es sich bei dem Betätigungselement jedoch um einen Pneumatikzylinder, da ein solcher insbesondere bei Wasserkontakt vorteilhaft ist. In der Regel sind mindestens zwei Betätigungselemente vorgesehen, um den Verschwenkprozess der Querachse optimal ausführen zu können.

Bei einer bevorzugten Ausführungsform des erfindungsgemäßen Fahrzeuges ist im Bootsrumpf mindestens ein Aufnahmeraum, vorzugsweise eine der Anzahl der Räder entsprechende Anzahl von Aufnahmeräumen zur Aufnahme der Räder vorgesehen, welche Aufnahmeräume gegenüber dem Innenraum des Bootsrumpfes wasserdicht abgeschlossen sind. Dadurch ist es beispielsweise möglich, dass das Amphibienfahrzeug nach dem Überführen vom Land ins Wasser noch kurzfristig in der Fahrstellung verbleibt und erst im Wasser in die Schwimmstellung überführt wird, wobei dabei verhindert wird, dass Wasser in den Innenraum des Bootsrumpfes eindringt. Bei einer Weiterbildung des erfindungsgemäßen Fahrzeuges kann auch eine Bodenklappe vorgesehen sein, welche den Aufnahmeraum auch im Bereich des Bodens des Bootsrumpfes abschließt. Diese Klappe kann den Aufnahmeraum beispielsweise vor einem Überführen ins Wasser verschließen, wobei die Räder trocken bleiben.

Das mindestens eine Betätigungselement kann beispielsweise an einer Wand des Aufnahmeraums angeordnet sein.

In der Regel ist im Bereich des Hecks des erfindungsgemäßen Bootsrumpfes ein Antriebsmotor mit Propeller, insbesondere ein Außen- oder Innenbordmotor, oder ein Elektroantrieb angeordnet, um das Amphibienfahrzeug im Wasser antreiben zu können.

Mit Vorteil weist der Bootsrumpf im Bugbereich eine Zugdeichsel zur Kopplung an ein Zugfahrzeug auf. Die Zugdeichsel ist vorzugsweise wenigstens in einer Richtung schwenkbar gelagert und/oder abnehmbar, damit der Bootsbetrieb störungsfrei ablaufen kann. Die Zugdeichsel ist vorzugweise so ausgestaltet, dass diese im Liegebetrieb beispielsweise im Hafen an einer am Bootssteg angebrachten Kugelkopfhalterung festgemacht werden kann. Die Zugdeichsel ist vorzugsweise kurbelbar. Dadurch kann das Amphibienfahrzeug beispielsweise an einen PKW angehängt und als Wohnwagen benutzt werden. Vorher muss die Querachse selbstverständlich in die Fahrstellung überführt werden.

In der Regel weist der Bootsrumpf ein, vorzugsweise im Heckbereich angeordnetes Ruder zum Steuern des Fahrzeuges im Wasser auf.

Der Bootsrumpf kann ferner ein oberhalb der Wasserlinie liegendes Deck aufweisen.

Der Aufbau des erfindungsgemäßen Amphibienfahrzeuges weist in der Regel eine kastenähnliche Gestalt mit einem Dach und Seitenwänden auf. In den Seitenwänden können beispielsweise Fenster angeordnet sein.

Mit Vorteil umfasst das erfindungsgemäße Amphibienfahrzeug ferner mindestens ein Element, ausgewählt aus der Gruppe von Wassertanks, Möbel, Toilette, Waschbecken, Dusche und Küchengeräte, wobei die Elemente vorzugsweise im Innenraum des Bootsrumpfes angeordnet sind. Mit den genannten Elementen ist ein Wohnen über einen längeren Zeitraum problemlos möglich.

Vorzugsweise ist das erfindungsgemäße Amphibienfahrzeug gekennzeichnet durch eine im Heckbereich angeordnete Anhängevorrichtung (20), insbesondere Zugdeichselaufnahme zum Ankoppeln weiterer Fahrzeuge und/oder zum Ankern. Damit ist ein energiesparender Konvoi-Transport möglich.

Mit Vorteil umfasst das erfindungsgemäße Fahrzeug mindestens zwei seitlich am Bootsrumpf angeordnete Koppelvorrichtungen (21), insbesondere schwenkbar gelagerte Seitenarmaufnahmen zum Ankoppeln weiterer, parallel nebeneinander liegender Fahrzeuge.

Mit Vorteil ist das erfindungsgemäße Amphibienfahrzeug gekennzeichnet durch mindestens ein, vorzugsweise nachträglich montierbares, vorzugsweise lenkbares Stützrad, welches insbesondere im Bugbereich angeordnet ist und über einen Antrieb, insbesondere Radnabenantrieb antreibbar ist.

Weitere Merkmale der Erfindung ergeben sich aus der nachfolgenden Beschreibung von bevorzugten Ausführungsbeispielen der Erfindung in Verbindung mit den Zeichnungen und den Unteransprüchen. Hierbei können die einzelnen Merkmale für sich allein oder in Kombination miteinander verwirklicht sein.

Es zeigen:
- Fig. 1:: eine schematische Seitenansicht eines erfindungsgemäßen Amphibienfahrzeuges in der Fahrstellung;
- Fig. 2:: eine schematische Seitenansicht einer weiteren Ausführungs-form eines erfindungsgemäßen Amphibienfahrzeugs in der Fahrstellung;
- Fig. 3:: eine Heckansicht auf das Fahrzeug gemäß Figur 2.

Nachfolgend werden gleiche oder funktionsgleiche Elemente mit den gleichen Bezugsziffern gekennzeichnet.

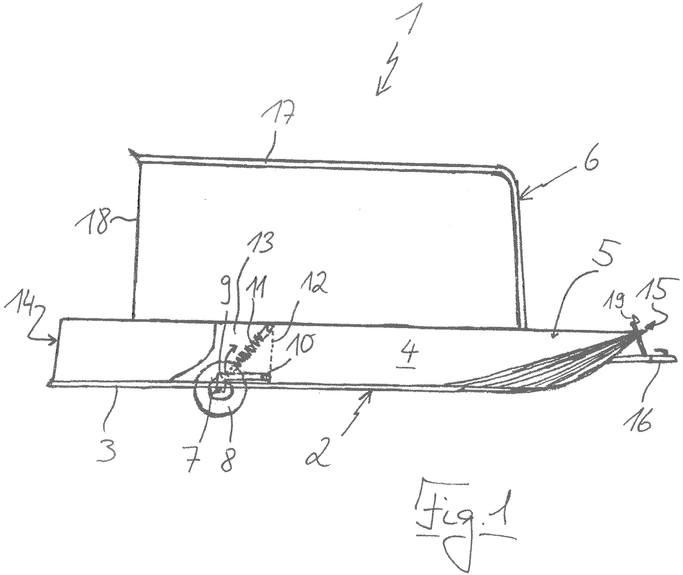

Fig. 1 zeigt eine schematische Seitenansicht eines erfindungsgemäßen Amphibienfahrzeuges 1 mit einem Bootsrumpf 2. Der Bootsrumpf 2 umfasst einen Boden 3 sowie eine Bordwand 4. Der Boden 3 bildet mit der Bordwand 4 einen Innenraum 5. Am Bootsrumpf 2 ist ein als Wohnraum ausgebildeter kastenartiger Aufbau 6 angeordnet. Der kastenartige Aufbau 6 steht an beiden Seiten über die Bordwand 4 hinaus und weist in seinem Inneren mindestens Stehhöhe auf.

Am Bootsrumpf 2 sind zwei um jeweils eine Drehachse 7 rotierbare Räder 8 gelagert.

Die Räder 8, von denen in Figur 1 nur eines zu sehen ist, sind an jeweils einer Einzelradschwinge 9 angeordnet, welche um eine parallel zur Achse 7 und quer zur Fahrtrichtung angeordnete Schwenkachse 10 verschwenkbar ist. An den Schwingen 9 ist jeweils ein Pneumatikzylinder 11 (hier nur einer von beiden zu sehen) angeordnet. Mit ihrem zweiten Ende sind die Pneumatikzylinder 11 an jeweils einer Vertikalwand 12 eines Aufnahmeraumes 13 angeordnet. In der in Fig. 1 gezeigten Stellung sind die Pneumatikzylinder 11 in einem ausgefahrenen Zustand dargestellt. Dabei ist die jeweilige Schwinge mit den daran angeordneten Rädern so positioniert, dass die Räder 8 teilweise aus ihrem Aufnahmeraum 13 herausstehen, sodass sich die Räder 8 ca. zur Hälfte unterhalb des Bodens 3 des Bootsrumpfes 2 befinden. In dieser Fahrstellung des Fahrzeuges 1 lässt sich dieses an Land verfahren. Jedem der beiden Räder ist ein Aufnahmeraum 13 zugeordnet.

Soll das Fahrzeug 1 nun von der dargestellten Fahrstellung in eine Schwimmstellung überführt werden, werden auf einfache Art und Weise die Kolbenstangen der Pneumatikzylinder 11 in die jeweiligen Zylinderrohre eingefahren, sodass die Schwingen 9 mit den Rädern 8 um ihre Schwenkachse 10 in den jeweiligen Aufnahmeraum 13 verschwenkt werden (siehe Pfeil in Fig. 1). Dabei wird jede Schwinge 9 soweit in ihren Aufnahmeraum 13 verschwenkt, bis sich die Räder 8 vollständig oberhalb des Bodens 3 des Bootsrumpfes 2 befinden. Nach einem Einschwenken der Schwingen 9 und der Räder 8 in den jeweiligen Aufnahmeraum 13 ist es denkbar, dass jeder Aufnahmeraum 13 auch nach unten hin über eine Klappe im Boden 3 vollständig abgeschlossen werden kann.

Im Bereich des Hecks 14 des Bootsrumpfes 2 ist ein Innenbordmotor mit einem antreibbaren Propeller (hier nicht dargestellt) angeordnet, um das Fahrzeug 1 im Wasser antreiben zu können.

Im Bugbereich 15 des Bootsrumpfes 2 ist eine mittels einer Kurbel 19 kurbelbare Zugdeichsel 16 zur Kopplung an ein Zugfahrzeug angeordnet. Mit Hilfe dieser Zugdeichsel lässt sich das Fahrzeug 1 in der Fahrstellung der Achse 7 an ein Zugfahrzeug, wie beispielsweise einen PKW ankoppeln, sodass das Fahrzeug 1 vom Zugfahrzeug über Land gezogen werden kann. Der Aufbau 6 weist ein Dach 17 sowie Seitenwände 18 auf, in welchen Fenstern angeordnet sein können. Im Inneren des Aufbaus 6 sind Wassertanks, Möbel, eine Toilette, ein Waschbecken, eine Dusche sowie Küchengeräte (allesamt hier nicht dargestellt) angeordnet.

Das erfindungsgemäße Fahrzeug kann schnell und ohne technische Hilfsmittel auf seine jeweils andere Nutzungsart umgerüstet werden. Durch besondere Ausgestaltungen kann es sowohl den Zulassungsbedingungen für Wohnwagen als auch denjenigen für Wasserfahrzeuge entsprechen. Durch die Wahl entsprechender Materialien kommt es durch einfaches Hineinfahren ins Wasser zum Aufschwimmen. Dadurch ist es insbesondere für amphibische Campingzwecke geeignet, zumal dabei anstelle eines Wohnwagens und eines zusätzlichen Bootes nur ein Fahrzeug gehalten werden muss und die Kosten eines Dauerliegeplatzes und eines Winterlagers für das Boot wegfallen. Da der Innenraum des am Bootsrumpf befindlichen Aufbaus mit allen seinen Einrichtungen an Land und auf dem Wasser unverändert bleibt, ergibt sich eine besonders zweckmäßige und wirtschaftliche Nutzung.

Das oben beschriebene bevorzugte Ausführungsbeispiel eines erfindungsgemäßen Fahrzeuges zeigt eine Einzelradaufhängung, bei welcher jedes Rad an einer Einzelradschwinge angeordnet ist. Theoretisch ist es denkbar, dass die Räder durch eine gemeinsame Achse miteinander verbunden sind. Bei dieser Ausführungsform wäre es jedoch erforderlich, dass sich der Aufnahmeraum über die gesamte Breite des Bootes erstreckt, was nicht vorteilhaft ist.

Im oben beschriebenen Ausführungsbeispiel gemäß Figur 1 sind auch die beiden Einzelradschwingen nicht miteinander verbunden. Vielmehr verfügt jede Schwinge über eine eigene, nicht mit der anderen verbundene Drehachse. Hier wäre es auch denkbar, dass zwei, über eine gemeinsame Drehachse verbundene Schwingen vorgesehen sind. Dies hätte den Vorteil, dass beide Schwingen mittels eines einzigen Betätigungselements verschwenkt werden könnten. Allerdings hat eine solche Konstruktion wieder einen erhöhten Konstruktionsaufwand durch eine durchgehende Drehachse. Aus diesem Grunde ist es etwas vorteilhafter, dass die beiden Einzelradschwingen unabhängig voneinander in jeweils einem abgeschlossenen Aufnahmeraum positioniert sind.

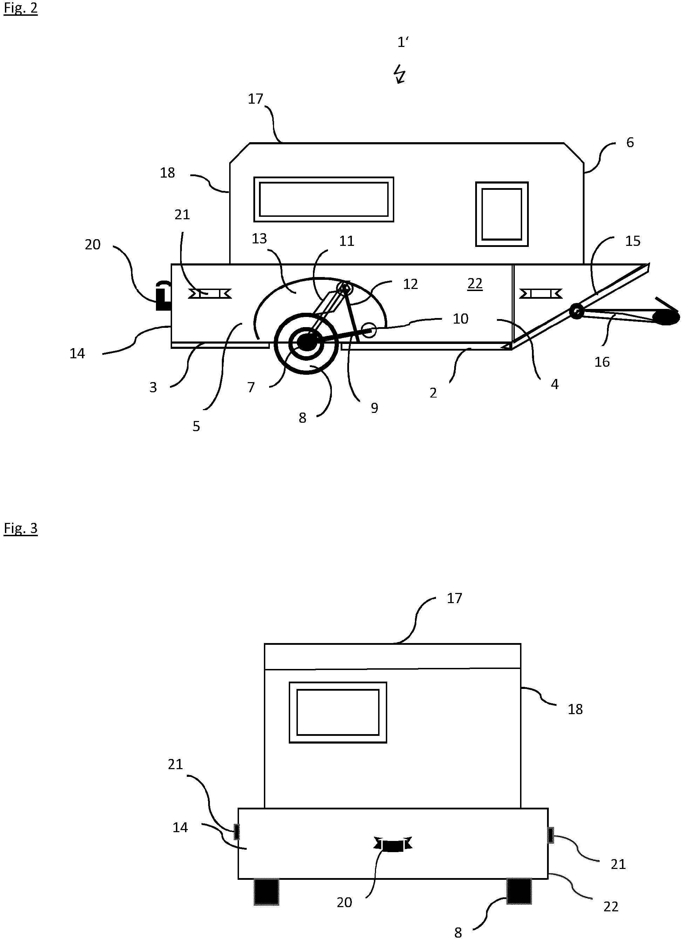

Figur 2 zeigt schematisch eine Seitenansicht eines weiteren erfindungsgemäßen Amphibienfahrzeuges 1'. Figur 3 zeigt eine Ansicht auf das Heck des Fahrzeugs gemäß Figur 2. Das in den Figuren 2 und 3 dargestellte erfindungsgemäße Fahrzeug unterscheidet sich von dem in Figur 1 dargestellten Fahrzeug im Prinzip lediglich durch die folgenden weiteren Elemente. Das Fahrzeug 1' gemäß den Figuren 2 und 3 umfasst ferner eine am Heck angeordnete Anhängevorrichtung 20 zum Anhängen weiterer Amphibienfahrzeuge. So ist es denkbar, dass diese Anhängevorrichtung 20 so ausgestaltet ist, dass eine Zugdeichsel eines dahinter angeordneten Fahrzeuges an diese Vorrichtung 20 angekoppelt werden kann.

An den Seitenwänden 22 des Bootrumpfes 2 sind jeweils zwei Koppelvorrichtungen 21 zum Anhängen bzw. Ankoppeln weiterer Amphibienfahrzeuge vorgesehen.

## Patentansprüche

1. Amphibienfahrzeug (1, 1') mit einem einen Boden (3) sowie eine Bordwand (4) aufweisenden Bootsrumpf (2), an welchem mindestens zwei Räder (8) angeordnet sind, wobei am Bootsrumpf (2) ein einen Wohn- und/oder Nutzraum bildender Aufbau (6) angeordnet ist, wobei die Räder (7) mittels mindestens eines Betätigungselements (11) von einer Fahrstellung, in welcher sich die Räder (8) zumindest teilweise unterhalb des Bodens (3) des Bootsrumpfes (2) befinden, in eine Schwimmstellung, in welcher sich die Räder (8) oberhalb des Bodens (3) des Bootsrumpfes (2) befinden, verschwenkbar sind.

2. Fahrzeug nach Anspruch 1, **dadurch gekennzeichnet, dass** jedes Rad an einem Haltegestell (9), insbesondere einer Einzelradschwinge angeordnet ist, welches vorzugsweise um eine quer zur Fahrtrichtung angeordnete Schwenkachse (10) verschwenkbar ist.

3. Fahrzeug nach Anspruch 2, **dadurch gekennzeichnet, dass** jeweils ein Betätigungselement (11) an jeweils einem Haltegestell (9) angreift und das Haltegestell (9) mit dem daran angeordneten Rad (8) verschwenkt.

4. Fahrzeug nach einem der vorhergehenden Ansprüche, **dadurch gekennzeichnet, dass** es sich bei dem Betätigungselement um einen Pneumatikzylinder (11) oder Hydraulikzylinder handelt.

5. Fahrzeug nach einem der vorhergehenden Ansprüche, **dadurch gekennzeichnet, dass** im Bootsrumpf (2) mindestens ein Aufnahmeraum (13), vorzugsweise eine der Anzahl der Räder entsprechende Anzahl von Aufnahmeräumen zur Aufnahme der Räder (8) vorgesehen ist, welche Aufnahmeräume (13) gegenüber dem Innenraum (5) des Bootsrumpfes (2) wasserdicht abgeschlossen sind.

6. Fahrzeug nach Anspruch 5, **dadurch gekennzeichnet, dass** das mindestens eine Betätigungselement (11) an einer Wand (12) des Aufnahmeraums (13) angeordnet ist.

7. Fahrzeug nach einem der vorhergehenden Ansprüche, **dadurch gekennzeichnet, dass** im Bereich des Hecks (14) des Bootsrumpfes (2) ein Antriebsmotor mit Propeller, insbesondere ein Außen- oder Innenbordmotor oder ein Elektroantrieb angeordnet ist.

8. Fahrzeug nach einem der vorhergehenden Ansprüche, **dadurch gekennzeichnet, dass** der Bootsrumpf (2) im Bugbereich (15) eine insbesondere kurbelbare Zugdeichsel (16) zur Kopplung an ein Zugfahrzeug aufweist, wobei die Zugdeichsel (16) vorzugsweise in einer Richtung schwenkbar und/oder abnehmbar ausgebildet ist, wobei die Zugdeichsel vorzugsweise so ausgestaltet ist, dass sie mit einer an einer Anliegestelle angeordneten Kugelkopfhalterung zusammenwirken kann.

9. Fahrzeug nach einem der vorhergehenden Ansprüche, **dadurch gekennzeichnet, dass** der Bootsrumpf (2) ein vorzugsweise im Heckbereich angeordnetes Ruder aufweist.

10. Fahrzeug nach einem der vorhergehenden Ansprüche, **dadurch gekennzeichnet, dass** der Bootsrumpf (2) in seinem Heckbereich (14) ein oberhalb der Wasserlinie liegendes Deck aufweist.

11. Fahrzeug nach einem der vorhergehenden Ansprüche, **dadurch gekennzeichnet, dass** der Aufbau (6) eine kastenartige Gestalt mit einer im Wesentlichen horizontalen Decke (17) sowie Seitenwänden (18) aufweist.

12. Fahrzeug nach einem der vorhergehenden Ansprüche, ferner umfassend mindestens ein Element aus der Gruppe von Wassertanks, Möbel, Toilette, Waschbecken, Dusche und Küchengeräte, wobei die Elemente vorzugsweise im Innenraum (5) des Bootsrumpfes (2) angeordnet sind.

13. Fahrzeug nach einem der vorhergehenden Ansprüche, **gekennzeichnet durch** eine im Heckbereich angeordnete Anhängevorrichtung (20), inbesondere Zugdeichselaufnahme zum Ankoppeln weiterer Fahrzeuge und/oder zum Ankern.

14. Fahrzeug nach einem der vorhergehenden Ansprüche, **gekennzeichnet durch** mindestens zwei seitlich am Bootsrumpf angeordnete Koppelvorrichtungen (21), insbesondere schwenkbar gelagerte Seitenarmaufnahmen zum Ankoppeln weiterer, parallel nebeneinander liegender Fahrzeuge.

15. Fahrzeug nach einem der vorhergehenden Ansprüche, **gekennzeichnet durch** mindestens ein, vorzugsweise nachträglich montierbares, vorzugsweise lenkbares Stützrad, welches insbesondere im Bugbereich angeordnet ist und über einen Antrieb, insbesondere Radnabenantrieb antreibbar ist.
